# EUROPEAN PATENT SPECIFICATION

(11) **EP 0 442 459 B1**
(45) Date of publication and mention of the grant of the patent: **29.09.1993**
(21) Application number: 91101988.3
(22) Date of filing: 13.02.1991
(51) Int. Cl.: F24D 19/06, F16B 2/04, A47K 10/06, A47K 1/08

(54) **Multi-purpose bracket**
Mehrzweckstütze
Support polyvalent

(30) Priority: 16.02.1990 IT 472790 U
(43) Date of publication of application: 21.08.1991
(73) Proprietor: IRSAP - IRSOL S.r.l., I-45031 ARQUA' POLESINE (IT)
(72) Inventor: Lilla, Stefania, I-00040 Roma (IT)
(74) Representative: Jorio, Paolo, Dr. Ing.

(56) References cited:
- BE-A- 705 743
- NL-C- 112 093

## Description

The present invention relates to a column type structure with a multi-purpose bracket provided with a connecting system of improved type for connection to the structure. The structure has vertical or horizontal columns and can be defined, for example, to heating radiator.
It is known that, currently, column type heating radiators are being developed which, as well as the primary function of constituting heating elements, are of high aesthetic value in that they not only constitute the heating elements themselves but are also adapted to support brackets or object carriers in general. The current brackets supported by such radiators have a connection system which provides a relatively complex manner of fixing.
In the Patent Application NL-A-112 093 is described a connector for supporting a structure and having a fixed plate with a portion inserted into a bore of the structure, and a movable plate inserted into this bore for be compressed between the fixed plate and a rim of the bore. It is clear that this connector is unfit to support a column type structure. The object of the present invention is that of providing a column type structure with a multi-purpose bracket which has an easy, rapid and secure system for connection to the column type structure.
Further objects and advantages of the present invention will become evident during the course of the following description.
According to the present invention there is provided a column type structure having at least one row coplanar parallel columns at a predetermined distance from one another and comprising a multi-purpose bracket which has an object carrier member and at least one connector for fixing to the said columns and for support of the said member, the said connector having a portion inserted in a force manner between two of the said contiguous columns, characterised by the fact that the said connector includes:
a first body engaged to a first of the said columns, having a substantially "L" shape longitudinal form with a first rectilinear section and a first end portion bent with respect to the said first section, and having a first face, in which there is formed a first seat engaged by the said first column and a second face opposite this said first face of the said first body;
a second body engaged to a second of the said columns, having a substantially "L" shape longitudinal form with a second rectilinear section and a second end portion bent with respect to the said second section, and having a first face, in which there is formed a second seat engaged by the said second column and a second face opposite this said first face of the said second body and in contact with the said second face of the said first body;
a first projection adapted to define the said first seat with the said first end portion, extending from the said first face of the said first body;
a second projection adapted to define the said second seat with the said second end portion, extending from the said first face of the said second body; and
the overall thickness of a region of the said sections of the said connector being slightly greater than the distance between the said contiguous columns.

For a better understanding of the present invention a preferred embodiment thereof is now described purely by way of non limitative example, with reference to the attached drawings, in which:
Figure 1 is a partially sectioned plan view of a bracket formed according to the principles of the present invention;
Figure 2 is a rear view of a connection for the bracket of Figure 1;
Figure 3 is a side view of an element of the connector of Figure 2; and
Figures 4, 5 and 6 are plan views of the connector of Figure 2 showing the way it is fixed.

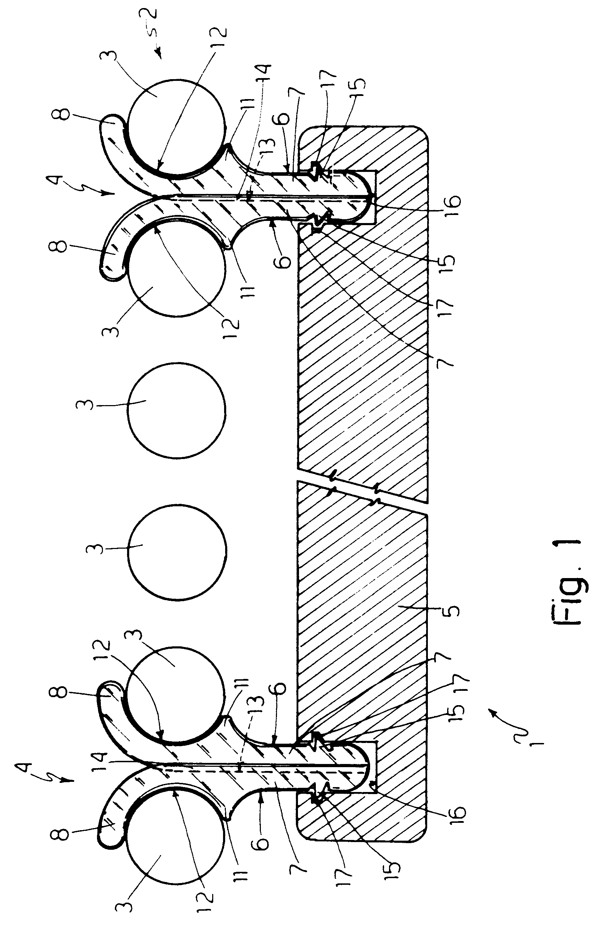

As illustrated in Figure 1, a multi-purpose bracket is generally indicated with the reference numeral 1, adapted to be supported from a supporting structure 2 constituted by a row of vertical columns 3 which in this embodiment are of cylindrical form. The bracket 1 comprises, at the same level, two connectors 4 and a horizontal bar 5. The connectors 4 at one end form a fixing to two contiguous columns 3 and at the opposite end support a corresponding end of the bar 5 which can be conveniently utilised as a support for hand towels, bath sheets or other purposes.

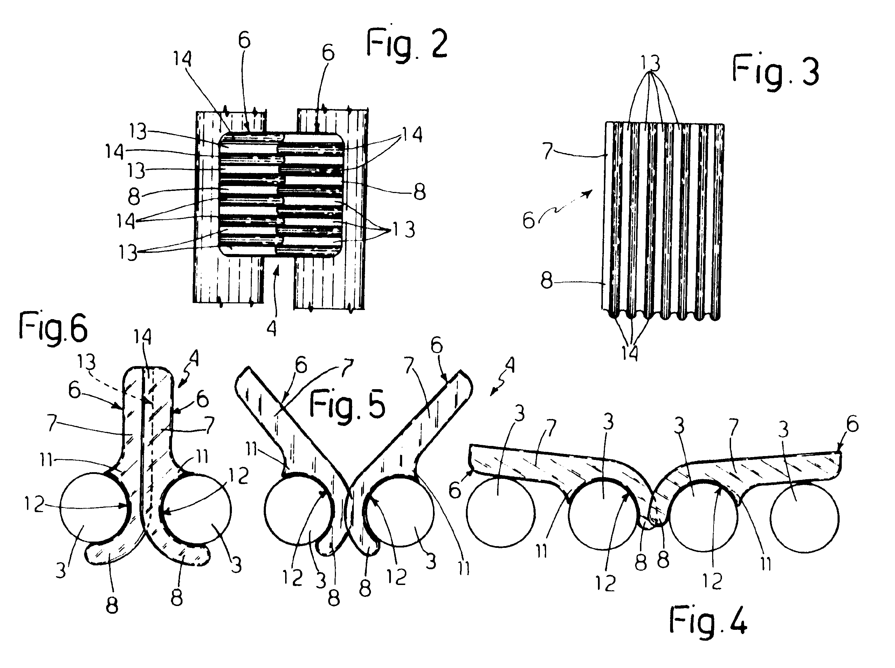

With reference to Figures 1, 2 and 3, each connector 4 is constituted by two similar bodies which because of their shape and the system for mounting them form a secure anchorage both between themselves and between two contiguous columns 3. Each of these bodies comprises a plate 6 which in use is defined on a vertical plane and which longitudinally is of "L" shape. This plate 6 has a consistent rectilinear section 7 and an end portion 8 which longitudinally describes an arc of a circle. From one intermediate region of a first face of the section 7 extends a projection 11 of decreasing thickness in that it is laterally delimited by two walls defined along respective semi-cylindrical surfaces. One of these lateral walls of the projection 11 is diametrically opposite to a first face of the portion 8 and defines with this a similar cylindrical seat 12 engaged by a column 3. Along the longitudinal axis of a second face of the section 7 and of a second face of the portion 8, in longitudinal continuity with the preceding bracket face there is formed a plurality of groves 13 which extend over the whole of the length of the plate 6. These groves 13 are parallel to one another, uniformly distributed and define a corresponding plurality of longitudinal projections 14. As illustrated in Figure 2, the grooves 13 of a plate 6 are offset by one step with respect to those of a second plate 6 which forms the coupling 4 with the first. In this way, in use, the grooves 13 of one plate 6 are engaged by projections 14 of the other plate 6 and vice versa.

Figures 4, 5 and 6 illustrate in sequence the manner in which the connector 4 is fitted together and contemporaneously anchored between two contiguous columns 3. Plates 6 are first positioned as illustrated in Figure 4, that is to say with the seats 12 engaged by the respective columns 3 and with the portions 8 both disposed in the space defined between these columns 3. Naturally the grooves 13 of one portion 8 of the first plate are engaged by projections 14 of the portion 8 of the second plate 6. The overall thickness of the portions 8 of the connector 4 and of the sections 7 of the corresponding part of the seats 12 must be slightly greater than the distance defined between two contiguous columns 3 in such a way that the insertion of these parts of the coupling 4 between these latter is slightly forced. Now by simultaneously rotating the plates 6 about the axis of the corresponding column 3 in such a way as to draw the respective sections 7 towards one another, the forced insertion between the columns 3 of the parts of the sections 7 corresponding to the seats 12 is achieved (see Figure 5). By rotating the plates 6 even further the connector 4 is defined as illustrated in Figure 6, in which the sections 7 of the plates 6 are positioned parallel to and facing one another and fixed together by the engagement in the grooves 13 of one or other of the projections 14. Because of the overall thickness of the sections 7 relative to the seat 12 a secure and effective anchorage of the connector 4 to the two contiguous columns 3 is achieved. The shape of the plates 6 prevents any relative sliding both in a horizontal direction and in a vertical direction. If the structure 2 has a plurality of rows of columns 3 the thickness of each portion 8 must be less than the distance defined between two contiguous rows.

In Figure 1 there is illustrated one possible support system for the bar 5 by the couplings 4. In this example on the said first face of the section 7 there is formed a respective tooth 15 in such a way as to form a snap fixing between the couplings 4 and the bar 5. This in fact has on its face facing the structure 2 two aligned holes 16 one for each coupling 4, which are engaged by the ends of the corresponding coupling 4 and have seats 17 which are snap engaged by the teeth 15.

From what has been described the numerous advantages achieved with the embodiment of the present invention are evident.

In particular, the mounting of the bracket 1 on the structure 2 is simple and can be achieved rapidly and without the necessity of any type of tool. Moreover the bracket 1 can, equally easily, be dismantled from the structure 2 so as to make it possible to transfer it to another region of the same or to a different structure. The connector 4 is constituted by two elements of identical shape and dimensions and therefore it is possible to make these in plastics material by moulding using a single mould. This consideration and the evident simplicity of shape of the bracket 1 makes it possible for this to be made at a low production cost. It is to be underlined that the bracket 1 and in particular the coupling 4 has an indubitably original aesthetic appearance. Finally, it is to be noted that the bracket 1 can be installed even on structures having several rows of columns.

The bracket 1 can be made entirely or partly of plastics material, perhaps in combination with metal, wood or glass. The bracket 1 could be provided with a single connector 4 and this constitutes the support for an object. For example at the free end of the connector 4 there could be formed a knob of any shape, or hooks for the support of garments. Alternatively, the connector 4 could support a plate or an object carrier body of any form. The shape of the plate 6 could be different from that illustrated whilst remaining within the principle of defining seats for the columns 3. In place of or together with the system of cooperation between two plates 6 defined by the grooves 13 and the projections 14, the connector 4 could be provided with a snap or other fixing system between the two plates 6. These could be shaped differently from one another and for example one could be of shorter length than the other and be housed in a seat formed in this latter. The bar 5 could assume any shape and the fixing means for this to the connectors 4 could be different from that illustrated. The bracket 1 as will appear evident can be supported also by horizontal column structures. These columns can also be other than cylindrical so that the seats 12 of the hooks 4 must have clamping surfaces having a development equivalent to the shape of these columns.

## Claims

1. A column type structure having at least one row coplanar parallel columns (3) at a predetermined distance from one another and comprising a multi-purpose bracket (1) which has an object carrier member (5) and at least one connector (4) for fixing to the said columns (3) and for support of the said member (5), the said connector (4) having a portion inserted in a force manner between two of the said contiguous columns (3), characterised by the fact that the said connector (4) includes:
a first body (6) engaged to a first of the said columns (3), having a substantially "L" shape longitudinal form with a first rectilinear section (7) and a first end portion (8) bent with respect to the said first section (7), and having a first face, in which there is formed a first seat (12) engaged by the said first column (3) and a second face opposite this said first face of the said first body (6);
a second body (6) engaged to a second of the said columns (3), having a substantially "L" shape longitudinal form with a second rectilinear section (7) and a second end portion (8) bent with respect to the said second section (7), and having a first face, in which there is formed a second seat (12) engaged by the said second column (3) and a second face opposite this said first face of the said second body (6) and in contact with the said second face of the said first body (6);
a first projection (11) adapted to define the said first seat (12) with the said first end portion (8), extending from the said first face of the said first body (6);
a second projection (11) adapted to define the said second seat (12) with the said second end portion (8), extending from the said first face of the said second body (6); and
the overall thickness of a region of the said sections (7) of the said connector (4) being slightly greater than the distance between the said contiguous columns (3).

2. A column type structure according to Claim 1, characterised by the fact the overall thickness of the said first and second end portions (8) of the said connector (4) is such as to permit insertion the mounting stage of the said first and second end portions (8) between the said contiguous columns (3).

3. A column type structure according to Claim 1 and/or 2, characterised by the fact that the said first and second projections (11) are of tapering thickness.

4. A column type structure according to Claim 3, characterised by the fact that the said columns (3) are cylindrical and the said first and second seats (12) are of semi-cylindrical shape in that they are defined by the corresponding said first or second end portion (8) which longitudinally describes an arc of a circle and by a lateral wall of the corresponding said first or second projections (11) which also follows an arc of a circle.

5. A column type structure according to at least one of Claims from 1 to 4, characterised by the fact that on the said second face of the said first and second bodies (6) there are formed longitudinal grooves (13) alternating with third projections (14); the said grooves of the said first body (6) being engaged by the said third projections (14) of the said second body (6) and vice versa.

6. A column type structure according to Claim 5, characterised by the fact the said first and second bodies (6) have the same shape and dimensions.

7. A column type structure according to any preceding Claim, characterised by the fact that the said connector (4) is made of plastics material preferably moulded.

8. A column type structure according to any preceding Claim, characterised by the fact that it includes two of the said connectors (4) mounted at the same level on the said structure; the said object carrier member being a bar (5) and means for fixing this to said connectors (4).

## Patentansprüche

1. Säulenartige Struktur mit wenigstens einer Reihe koplanarer, paralleler Säulen (3) in einem vorbestimmten Abstand voneinander und mit einer Mehrzweckklammer (1), die ein Gegenstandstrageteil (5) und wenigstens ein Verbindungselement (4) zur Fixierung an den Säulen (3) und zum Halten des Teiles (5) aufweist, wobei das Verbindungselement (4) einen in erzwungener Weise zwischen zwei der benachbarten Säulen (3) eingefügten Teilbereich hat, **dadurch gekennzeichnet**, daß das Verbindungselement (4) aufweist
einen mit einer ersten der Säulen (3) in Eingriff stehenden ersten Körper (6), der eine im wesentlichen L-förmige, längliche Gestalt mit einem ersten geraden Abschnitt (7) sowie einem ersten Endbereich (8) hat, der in Bezug auf den ersten Abschnitt (7) gebogen ist, und der eine erste Fläche hat, in der eine erste Paßfläche (12) gebildet ist, die mit der ersten Säule (3) in Eingriff steht, sowie eine zweite Fläche hat, die der ersten Fläche des ersten Körpers (6) gegenüberliegt,
einen mit einer zweiten der Säulen (3) in Eingriff stehenden zweiten Körper (6), der eine im wesentlichen L-förmige, längliche Gestalt mit einem zweiten geraden Abschnitt (7) sowie einem zweiten Endbereich (8) hat, der in Bezug auf den zweiten Abschnitt (7) gebogen ist, und eine erste Fläche hat, in der eine zweite Paßfläche (12) gebildet ist, die mit der zweiten Säule (3) in Eingriff steht, sowie eine zweite Fläche hat, die der ersten Fläche des zweiten Körpers (6) gegenüberliegt und in Kontakt mit der zweiten Fläche des ersten Körpers (6) ist,
einen ersten Fortsatz (11), der zum Bilden der ersten Paßfläche (12) mit dem ersten Endbereich (8) angepaßt ist und sich von der ersten Fläche des ersten Körpers (6) erstreckt,
einen zweiten Fortsatz (11), der zum Bilden der zweiten Paßfläche (12) mit dem zweiten Endbereich (8) angepaßt ist und sich von der ersten Fläche des zweiten Körpers (6) erstreckt und
daß die Gesamtdicke eines Bereiches der Abschnitte (7) des Verbindungselementes (4) geringfügig größer als der Abstand zwischen den benachbarten Säulen (3) ist.

2. Säulenartige Struktur nach Anspruch 1, dadurch gekennzeichnet, daß die Gesamtdicke des ersten und zweiten Endbereiches (8) des Verbindungselementes (4) so ausgestaltet ist, daß sie das Einfügen des Befestigungsabschnittes des jeweils ersten und zweiten Endbereiches (8) zwischen die benachbarten Säulen (3) gestattet.

3. Säulenartige Struktur nach Anspruch 1 und/oder 2, dadurch gekennzeichnet, daß der erste und zweite Vorsprung (11) von konisch zulaufender Dicke sind.

4. Säulenartige Struktur nach Anspruch 3, dadurch gekennzeichnet, daß die Säulen (3) zylinderförmig sind und daß die erste und zweite Paßfläche (12) von halbzylinderförmiger Gestalt sind, wobei sie durch den entsprechenden ersten oder zweiten Endbereich (8) gebildet sind, die in Längsrichtung einen Kreisbogen beschreiben und durch seitliche Wände des entsprechenden ersten oder zweiten Vorsprunges (11) gebildet sind, die ebenfalls einem Kreisbogen folgen.

5. Säulenartige Struktur nach wenigstens einem der Ansprüche 1 bis 4, dadurch gekennzeichnet, daß der zweiten Fläche des ersten und zweiten Körpers (6) längsverlaufende, sich mit dritten Vorsprüngen (14) abwechselnde Nuten (13) gebildet sind, wobei die Nuten des ersten Körpers (6) mit den dritten Vorsprüngen (14) des zweiten Körpers (6) im Eingriff stehen und umgekehrt.

6. Säulenartige Struktur nach Anspruch 5, dadurch gekennzeichnet, daß der erste und zweite Körper (6) die gleiche Gestalt und Abmessungen haben.

7. Säulenartige Struktur nach einem der vorangehenden Ansprüche, dadurch gekennzeichnet, daß das Verbindungselement (4) aus einem vorzugsweise geformten Kunststoffmaterial gefertigt ist.

8. Säulenartige Struktur nach einem der vorangehenden Ansprüche, dadurch gekennzeichnet, daß sie zwei Verbindungselemente (4) aufweist, die auf der gleichen Höhe der Struktur angebracht sind und daß das Gegenstandstrageteil aus einem Stab (5) und einem Mittel zu dessen Fixieren an dem Verbindungselement (4) besteht.

## Revendications

1. Structure du type colonne comprenant au moins une rangée de colonnes (3) parallèles coplanaires à une distance prédéterminée l'une de l'autre et un support (1) à fonction multiple qui comprend un organe (5) de support d'objets et au moins un connecteur (4) pour la fixation auxdites colonnes (3) et pour supporter ledit organe (5), ledit connecteur ayant une partie insérée à force entre deux desdites colonnes (3) contiguës, caractérisée par le fait que ledit connecteur (4) comprend :
un premier corps (6) en prise avec une première desdites colonnes (3), ayant une forme longitudinale substantiellement en "L" avec une première section rectiligne (7) et une première partie d'extrémité (8) courbée par rapport à ladite première section (7), et ayant une première face dans laquelle est formé un premier siège (12) engagé par ladite première colonne (3) et une seconde face opposée à ladite première face dudit premier corps (6) ;
un second corps (6) en prise avec une seconde desdites colonnes (3), ayant une forme longitudinale substantiellement en "L" avec une seconde section rectiligne (7) et une seconde partie d'extrémité (8) courbée par rapport à ladite seconde section (7), et ayant une première face dans laquelle est formé un second siège (12) engagé par la seconde colonne (3) et une seconde face opposée à ladite première face dudit second corps (6) et en contact avec ladite seconde face dudit premier corps (6) ;
une première protubérance (11) adaptée pour définir ledit premier siège (12) avec ladite première partie d'extrémité (8), s'étendant à partir de ladite première face dudit premier corps (6) ;
une seconde protubérance (11) adaptée pour définir ledit second siège (12) avec ladite seconde partie d'extrémité (8), s'étendant à partir de la première face dudit second corps (6) ; et
l'épaisseur globale d'une région desdites sections (7) dudit connecteur (4) étant légèrement supérieure à la distance entre lesdites colonnes contiguës (3).

2. Structure du type colonne selon la revendication 1, caractérisée par le fait que l'épaisseur globale desdites première et seconde parties d'extrémité (8) dudit connecteur (4) est telle qu'elle permet l'étape de montage par insertion desdites première et seconde parties d'extrémité (8) entre lesdites colonnes contiguës (3).

3. Structure du type colonne selon la revendication 1 et/ou 2, caractérisée par le fait que lesdites première et seconde protubérances (11) présentent une épaisseur en pointe.

4. Structure du type colonne selon la revendication 3, caractérisée par le fait que lesdites colonnes (3) sont cylindriques et lesdits premier et second sièges (12) sont de forme semi cylindrique en ce sens qu'ils sont définis par ladite première ou seconde partie d'extrémité correspondante (8) qui décrit longitudinalement un arc de cercle et par une paroi latérale de ladite première ou seconde protubérance correspondante (11) qui suit aussi un arc de cercle.

5. Structure de type colonne selon au moins une des revendications 1 à 4, caractérisée par le fait que sur ladite seconde face desdits premier et second corps (6) sont formées des rainures longitudinales (13) alternant avec les troisièmes protubérances (14) ; lesdites rainures dudit premier corps (6) étant engagées par lesdites troisièmes protubérances (14) dudit second corps (6) et vice et versa.

6. Structure du type colonne selon la revendication 5, caractérisée par le fait que lesdits premier et second corps (6) ont la même forme et les mêmes dimensions.

7. Structure du type colonne selon une quelconque des revendications précédentes, caractérisée par le fait que ledit connecteur (4) est réalisé à partir d'un matériau plastique de préférence moulé.

8. Structure du type colonne selon l'une quelconque des revendications précédentes, caractérisée par le fait qu'il comprend deux desdits connecteurs (4) montés au même niveau sur ladite structure, ledit organe de support d'objets étant une barre (5), et des moyens pour fixer la barre auxdits connecteurs (4).
